# EUROPEAN PATENT APPLICATION

(11) **EP 4 310 199 A1**
(43) Date of publication of application: **24.01.2024**
(21) Application number: 22913661.9
(22) Date of filing: 13.10.2022
(51) Int. Cl.: C13B 30/02

(54) **METHOD FOR CRYSTALLIZATION OF COMPOUND SUGAR SOLUTION OF XYLOSE AND SUCROSE**

(30) Priority: 29.12.2021 CN 202111641260
(71) Applicant: Zhejiang Huakang Pharmaceutical Co., Ltd., Quzhou, Zhejiang 324302 (CN)
(72) Inventor: QIN, Shufang, Quzhou City, Zhejiang 342302 (CN); LI, Mian, Santa Clara, California 95054 (US); WU, Qiang, Quzhou City, Zhejiang 342302 (CN); YANG, Wulong, Quzhou City, Zhejiang 342302 (CN); ZHOU, Huan, Quzhou City, Zhejiang 324302 (CN); LIU, Yinyin, Quzhou City, Zhejiang 324302 (CN); YAN, Jiangen, Quzhou City, Zhejiang 324302 (CN)
(74) Representative: Sun, Yiming
(86) International application number: PCT/CN2022/125222
(87) International publication number: WO 2023/124397

(57) **Abstract**

A method for crystallizing a compound sugar solution of xylose and sucrose, including: first accurately weighing a certain amount of sucrose crystals and xylose crystals, then adding deionized water, stirring and dissolving to obtain a mixed solution; introducing the mixed solution into a crystallization device, setting a stirring speed in a range of 60rpm-120rpm, a temperature in a range of 75°C-80°C, and a vacuum pump pressure in a range of 50mbar-200mbar, turning on a vacuum evaporation device, evaporating the mixed solution until a refraction of the mixed solution reaches a range of 78Brix-81Brix, and stopping vacuum evaporation; adjusting the temperature to a range of 70°C-75°C, then adding food-grade isopropanol solution or ethanol solution dropwise, and adding a certain amount of sucrose seed crystals, and continuing stirring; when small seeds grow in the solution, dropping the temperature to a range of 40°C-60°C at a rate of 10°C/h, and then stirring for 6h to obtain the compound sugar solution; and centrifuging and then drying the compound sugar solution at the temperature in the range of 40°C-60°C to obtain a finished product of the compound sugar crystals of the xylose and the sucrose.

## Description

### TECHNICAL FIELD

The present disclosure is related to the technical field of sugar alcohol application, and in particular to a method for crystallizing compound sugar solution of xylose and sucrose.

### BACKGROUND

Sucrose is widely used due to a higher sweetness preference than other sweeteners. However, absorption or overeating of the sucrose may cause blood sugar elevation, obesity, dental caries, and other hazards, which violates the current consumption concept of people. Xylose is used as a new type of green additive because of its low sweetness, low calorie, and proliferation of intestinal probiotics, but its application is limited due to its poor flavor characteristics. Compound sugar of the sucrose and the xylose may not only meet a specific flavor requirement and a calorie requirement, but also reduce adverse health effects of the sucrose.

A compound crystallization of the sucrose and the xylose may not only meet the specific flavor requirements and the calorie requirements, but also inhibit a function of a portion of invertase to reduce decomposition and absorption of the sucrose by human body, reduce a glycemic index (GI) value of the sucrose in the human body, and reduce the obesity, the dental caries, diabetes, and other problems caused by overeating.

Most existing compound technologies of the sucrose and the xylose is preparing the compound sugar of the mixed xylose and sucrose in a form of coating or spraying by a physical mixing method. However, the obtained products have problems such as an uneven taste, a low hardness, layering caused by coating peeling off, etc., which seriously affect user experience.

Sucrose compound sugars in a co-crystallization manner may avoid the above defects, such as co-crystallization of the sucrose and honey, co-crystallization of neotame and the sucrose, co-crystallization of the sucrose and calcium salt, etc. However, there are no technical reports on the co-crystallization of the xylose and other sugars due to a low melting point of xylose and easy caramelization at a high temperature, making the co-crystallization difficult.

### SUMMARY

The technical problem solved by the present disclosure is to provide a method for crystallizing a compound sugar solution of xylose and sucrose. The compound crystalline sugar of xylose and sucrose is prepared by adopting co-crystallization technology, which not only solves the problem of low melting point and difficult co-crystallization of the xylose, but also improves undesirable attributes of xylose flavor and effectively reduces a risk of excessive intake of sugar to a human body. Meanwhile, the obtained crystalline sugar has similar appearance to that of the sucrose and a better crystal form, which solves the problem of an uneven taste, a low hardness, and layering caused by coating peeling off of products obtained by physical means, causing that consumers enjoy similar sucrose flavor while obtaining health experience.

According to the present disclosure, the method for crystallizing a compound sugar solution of xylose and sucrose includes the following operations.

Operation I, first accurately weighing a certain amount of sucrose crystals and xylose crystals, then adding deionized water, stirring and dissolving to obtain a mixed solution.

Operation II, introducing the mixed solution into a crystallization device, setting a stirring speed in a range of 60rpm-120rpm, a temperature in a range of 75°C- 80°C, and a vacuum pump pressure in a range of 50mbar-200mbar, turning on a vacuum evaporation device, evaporating the mixed solution until a refraction of the mixed solution reaches a range of 78Brix-81 Brix, and stopping the vacuum evaporation.

Operation III, adjusting the temperature in a range of 70°C-75°C, then adding food-grade isopropanol solution or ethanol solution dropwise, and adding a certain amount of sucrose seed crystals, and continuing stirring.

Operation IV, when small seeds grow in the solution, dropping the temperature to a range of 40°C-60°C at a rate of 10°C/h, and then stirring for 6h to obtain the compound sugar solution.

Operation V, centrifuging and then drying the compound sugar solution at the temperature in the range of 40°C-60°C to obtain a finished product of compound sugar crystals of the xylose and the sucrose.

The method further includes the following operations.

Operation 1, first, accurately weighing the sucrose crystals and the xylose crystals in a mass ratio of 2:1-6:1, then adding the deionized water with 0.45-0.60 times of a total sugar amount, stirring and dissolving at the temperature in the range of 75°C-80°C to obtain the mixted solution.

Operation 2, introducing the mixed solution into the crystallization device, setting the stirring speed in the range of 60rpm-120rpm, the temperature in the range of 75°C-80°C, and the vacuum pump pressure in the range of 50mbar-200mbar, turning on the vacuum evaporation device, evaporating the mixed solution until the refraction of the mixed solution reaches the range of 78Brix-81Brix, and stopping the vacuum evaporation.

Operation 3, adjusting the temperature to the range of 70°C-75°C, then adding the food-grade isopropanol solution or the ethanol solution dropwise in a volume ratio of 1:1-3:1 at a rate of 1-2 drops/s, and adding the sucrose seed crystals with a particle diameter of 60 mesh in a mass ratio of 0.5%-2% to sucrose, and continuing stirring for 1h-4h.

Operation 4, when the small seeds grow in the solution, dropping the temperature to the range of 40°C-60 °C at the rate of 10°C/h, and then stirring for 6h to obtain the compound sugar solution.

Operation 5, centrifuging and then drying the compound sugar solution at the teperature in the range of 40°C-60°C to obtain the finished product of the compound sugar crystals of the xylose and the sucrose, wherein a xylose content is in a range of 0.1%-5%.

Compared with prior technique, the method for crystallizing a compound sugar solution of xylose and sucrose of the present disclosure has following features.
1. The prepared product of the compound sugar crystal of the xylose and the sucrose has a complete crystal form, which is similar to the sucrose. The product also has a similar sweetness to the sucrose and a uniform taste, which meets preferences of the consumers.
2. The prepared product of the compound sugar crystal of the xylose and the sucrose may not cause adverse conditions such as the coating peeling off or the layering, which may be more conducive to storage.

### DETAILED DESCRIPTION

In order to solve the technical problems, and clarify the technical solutions and beneficial effects, the present disclosure will be further described in detail below in conjunction with the embodiments. It should be understood that the specific embodiments described here are only used to explain the present disclosure, not to limit the present disclosure.

The preferred embodiment of the method for crystallizing a compound sugar solution of xylose and sucrose includes the following operations.

Operation I, first accurately weighing a certain amount of sucrose crystals and xylose crystals, then adding deionized water, stirring, and dissolving to obtain a mixed solution.

Operation II, introducing the mixed solution into a crystallization device, setting a stirring speed in a range of 60rpm-120rpm, a temperature in a range of 75°C- 80°C, and a vacuum pump pressure in a range of 50mbar-200mbar, turning on a vacuum evaporation device, evaporating the mixed solution until a refraction of the mixed solution reaches a range of 78Brix-81Brix, and stopping vacuum evaporation.

Operation III, adjusting the temperature to a range of 70°C-75°C, then adding food-grade isopropanol solution or ethanol solution dropwise, and adding a certain amount of sucrose seed crystals, and continuing stirring.

Operation IV, when small seeds grow in the solution, dropping the temperature to a range of 40°C-60°C at a rate of 10°C/h, and then stirring for 6h to obtain the compound sugar solution.

Operation V, centrifuging and then drying the compound sugar solution at the temperature in the range of 40°C-60°C to obtain a finished product of the compound sugar crystals of the xylose and the sucrose.

Specifically, the method includes the following operations.

Operation 1, first accurately weighing the sucrose crystals and the xylose crystals in a mass ratio of 2:1-6:1, then adding the deionized water with 0.45-0.60 times of a total sugar amount, stirring and dissolving at the temperature in the range of 75°C-80°C to obtain the mixed solution.

Operation 2, introducing the mixed solution into the crystallization device, setting the stirring speed in the range of 60rpm-120rpm, the temperature in the range of 75°C-80°C, and the vacuum pump pressure in the range of 50mbar-200mbar, turning on the vacuum evaporation device, evaporating the mixed solution until the refraction of the mixed solution reaches the range of 78Brix-81Brix, and stopping the vacuum evaporation.

Operation 3, adjusting the temperature to the range of 70°C-75°C, then adding the food-grade isopropanol solution or the ethanol solution dropwise in a volume ratio of 1:1-3:1 at a rate of 1-2 drops/s, and adding the sucrose seed crystals with a particle diameter of 60 mesh in a mass ratio of 0.5%-2% to sucrose, and continuing stirring for 1h-4h.

Operation 4, when the small seeds grow in the solution, dropping the temperature to a range of 40°C-60 °C at the rate of 10°C/h, and then stirring for 6h to obtain the compound sugar solution.
operation 5, centrifuging and then drying the compound sugar solution at the temperature in the range of 40°C-60°C to obtain the finished product of the compound sugar crystals of the xylose and the sucrose, wherein the xylose content is in a range of 0.1 %-5%.

The method for crystallizing a compound sugar solution of xylose and sucrose of the present disclosure may be further illustrated below by specific examples.

### Example 1

The first example of the method for crystallizing a compound sugar solution of xylose and sucrose includes the following operations.

Operation 11, weighing 33.6g of the xylose and 168g of the sucrose, then adding 110.8g of deionized water, stirring and dissolving at 80°C to obtain mixed solution.

Operation 12, introducing the mixed solution into a crystallization device, setting a stirring speed at 100rpm, a temperature at 75°C, and a vacuum pump pressure at 50mbar, turning on the vacuum evaporation device, evaporating the mixed solution until a refraction of the mixed solution reaches 79Brix, and stopping the vacuum evaporation.

Operation 13, adjusting the temperature to 70°C, then adding food-grade isopropanol solution in a volume ratio of 1:1 dropwise at a rate of 1 drop/s, and adding 0.86g of sucrose seed crystals with a particle diameter of 80 mesh, and continuing stirring for 1h.

Operation 14, when small seeds grow in the solution, dropping the temperature to 40°C at a rate of 10°C/h, and then stirring for 6h to obtain the compound sugar solution

Operation 15, centrifuging and then drying the compound sugar solution at 60°C to obtain a finished product of the compound sugar crystals of the xylose and the sucrose, the xylose content being 2.68%.

### Example 2

The second example of the method for crystallizing a compound sugar solution of xylose and sucrose includes the following operations.

Operation 21, weighing 56g of the xylose and 168g of the sucrose, then adding 113.1g of deionized water, stirring and dissolving at 75°C to obtain mixed solution.

Operation 22, introducing the mixed solution into a crystallization device, setting a stirring speed at 120rpm, a temperature at 80°C, and a vacuum pump pressure at 60mbar, turning on a vacuum evaporation device, evaporating the mixed solution until a refraction of the mixed solution reaches 80Brix, and stopping the vacuum evaporation.

Operation 23, adjusting the temperature to 70°C, then adding food-grade ethanol solution in a volume ratio of 2:1 dropwise at a rate of 1 drop/s, and adding 0.86g of sucrose seed crystals with a particle diameter of 80 mesh, and continuing stirring for 1h.

Operation 24, when small seeds grow in the solution, dropping the temperature to 45°C at a rate of 10°C/h, and then stirring for 6h to obtain the compound sugar solution.

Operation 25, centrifuging and then drying the compound sugar solution at 50°C to obtain a finished product of the compound sugar crystals of the xylose and the sucrose, the xylose content being 4.63% .

### Example 3

The third Example of the method for crystallizing a compound sugar solution of xylose and sucrose includes the following operations.

Operation 31, weighing 84g of the xylose and 168g of the sucrose, then adding 126g of deionized water, stirring and dissolving at 80°C to obtain a mixed solution.

Operation 32, introducing the mixed solution into a crystallization device, setting a stirring speed at 115rpm, a temperature at 78°C, and a vacuum pump pressure at 90mbar, turning on a vacuum evaporation device, evaporating the mixed solution until a refraction of the mixed solution reaches 78Brix, and stopping the vacuum evaporation.

Operation 33, adjusting the temperature to 70°C, then adding food-grade isopropanol solution in a volume ratio of 3:1 dropwise at a rate of 2 drops/s, and adding 0.86g of the sucrose seed crystals with a particle diameter of 80 mesh, and continuing stirring for 2h.

Operation 34, when small seeds grow in the solution, dropping the temperature to 50°C at a rate of 10°C/h, and then stirring for 6h to obtain the compound sugar solution.

Operation 35, centrifuging and then drying the compound sugar solution at 40°C to obtain a finished product of the compound sugar crystals of the xylose and the sucrose, the xylose content being 1.15%.

### Example 4

The fourth Example of the method for crystallizing a compound sugar solution of xylose and sucrose includes the following operations.

Operation 41, weighing 28g of the xylose and 168g of the sucrose, then adding 88.2g of deionized water, stirring and dissolving at 77°C to obtain mixed solution.

Operation 42, introducing the mixed solution into a crystallization device, setting a stirring speed at 60rpm, a temperature at 78°C, and a vacuum pump pressure at 200mbar, turning on a vacuum evaporation device, evaporating the mixed solution until a refraction of the mixed solution reaches 81Brix, and stopping the vacuum evaporation ends.

Operation 43, adjusting the temperature to 75°C, then adding food-grade isopropanol solution in a volume ratio of 3:1 dropwise at the rate of 2 drops/s, and adding 3.36g of sucrose seed crystals with a particle diameter of 60 mesh, and continuing stirring for 2h.

Operation 44, when small seeds grow in the solution, dropping the temperature to 60°C at a rate of 10°C/h, and then stirring for 6h to obtain the compound sugar solution.

Operation 45, centrifuging and then drying the compound sugar solution at 40°C to obtain a finished product of the compound sugar crystals of the xylose and the sucrose, the xylose content being 0.85%.

Example 5 determination of a xylose content with different particle diameters The xylose content with different particle diameters may be determined by using a finished product of the compound sugar crystals of the xylose and the sucrose prepared in Example 1, and the results shown in Table 1 were obtained.

**Table 1**

| Particle diameter | More than 20 mesh | 20 mesh-30 mesh | Less than 30 mesh |
|---|---|---|---|
| Xylose content (%) | 2.66% | 2.65% | 2.70% |

The finished product of the compound sugar crystals of the xylose and the sucrose prepared by the method of the present disclosure has a uniform taste and no adverse situations such as layering and Uneven Sweetness Distribution.

### Example 6 product taste test

The taste tests of the finished product of the compound sugar crystals of the xylose and the sucrose prepared in Examples 1-3 were carried out respectively for comparison with sucrose. Both the finished product of the compound sugar crystals of the xylose and the sucrose and the sucrose were prepared sugar solution with a concentration of 7%. A taste strength is divided into 7 grades: 1-very weak, 2-weak, 3-slightly weak, 4-average, 5-slightly strong, 6-strong, 7-very strong, and taste results were shown in Table 2.

**Table 2 Product taste test results**

| item | sucrose | Example 1 | Example 2 | Example 3 |
|---|---|---|---|---|
| Sweetness | 5.3 | 5.1 | 4.9 | 5.3 |
| Bitterness | 1.7 | 2.1 | 2.2 | 2.1 |
| Metallic taste | 1 | 1.2 | 1.4 | 1.1 |
| Aftertaste | 2.5 | 2.3 | 2.1 | 2.5 |
| Aftertaste bitterness | 1.7 | 2.1 | 2.3 | 2.0 |
| Astringency | 1.9 | 2.5 | 3.0 | 2.2 |

The taste test results showed that the finished product of the compound sugar crystals of the xylose and the sucrose obtained by the method had taste similar to that of the sucrose, the sweetness close to that of the sucrose, and weak peculiar taste.

The above descriptions are only preferred embodiments of the present disclosure, and not intended to limit the scope of the present disclosure. Any modifications, equivalent replacements and improvements made within the spirit and principles of the present disclosure should be included in the protection scope of the present disclosure.

## Claims

1. A method for crystallizing a compound sugar solution of xylose and sucrose, comprising:
operation I, first accurately weighing a certain amount of sucrose crystals and xylose crystals, then adding deionized water, stirring and dissolving to obtain a mixed solution;
operation II, introducing the mixed solution into a crystallization device, setting a stirring speed in a range of 60rpm-120rpm, a temperature in a range of 75°C- 80°C, and a vacuum pump pressure in a range of 50mbar-200mbar, turning on a vacuum evaporation device, evaporating the mixed solution until a refraction of the mixed solution reaches a range of 78Brix-81Brix, and stopping vacuum evaporation;
operation III, adjusting the temperature to a range of 70°C-75°C, then adding food-grade isopropanol solution or ethanol solution dropwise, and adding a certain amount of sucrose seed crystals, and continuing stirring;
operation IV, when small seeds grow in the solution, dropping the temperature to a range of 40°C-60°C at a rate of 10°C/h and then stirring for 6h to obtain the compound sugar solution; and
operation V, centrifuging and then drying the compound sugar solution at the temperature in the range of 40°C-60°C to obtain a finished product of compound sugar crystals of the xylose and the sucrose.

2. The method of claim 1, comprising:
operation 1, first, accurately weighing the sucrose crystals and the xylose crystals in a mass ratio of 2:1-6:1, then adding the deionized water with 0.45-0.60 times of a total sugar amount, stirring and dissolving at the temperature in the range of 75°C-80°C to obtain the mixted solution;
operation 2, introducing the mixed solution into the crystallization device, setting the stirring speed in the range of 60rpm-120rpm, the temperature in the range of 75°C-80°C, and the vacuum pump pressure in the range of 50mbar-200mbar, turning on the vacuum evaporation device, evaporating the mixed solution until the refraction of the mixed solution reaches the range of 78Brix-81Brix, and stopping the vacuum evaporation;
operation 3, adjusting the temperature to the range of 70°C-75°C, then adding the food-grade isopropanol solution or the ethanol solution dropwise in a volume ratio of 1:1-3:1 dropwise at a rate of 1-2 drops/s, and adding the sucrose seed crystals with a particle diameter of 60 mesh in a mass ratio of 0.5%-2% to sucrose, and continuing stirring for 1h-4h;
operation 4, when the small seeds grow in the solution, dropping the temperature to the range of 40°C-60 °C at the rate of 10°C/h, and then stirring for 6h to obtain the compound sugar solution; and
operation 5, centrifuging and then drying the compound sugar solution at the temperature in the range of 40°C-60°C to obtain the finished product of the compound sugar crystals of the xylose and the sucrose, wherein a xylose content is in a range of 0.1 %-5%.

3. The method of claim 2, comprising:
operation 11, weighing 33.6g of the xylose and 168g of the sucrose, then adding 110.8g of the deionized water, stirring and dissolving at 80°C to obtain the mixed solution;
operation 12, introducing the mixed solution into the crystallization device, setting the stirring speed at 100rpm, the temperature at 75°C, and the vacuum pump pressure at 50mbar, turning on the vacuum evaporation device, evaporating the mixed solution until the refraction of the mixed solution reaches 79Brix, and stopping the vacuum evaporation;
operation 13, adjusting the temperature to 70°C, then adding the food-grade isopropanol solution in the volume ratio of 1:1 dropwise at the rate of 1 drop/s, and adding 0.86g of the sucrose seed crystals with the particle diameter of 80 mesh, and continuing stirring for 1h;
operation 14, when the small seeds grow in the solution, dropping the temperature to 40°C at the rate of 10°C/h, and then stirring for 6h to obtain the compound sugar solution; and
operation 15, centrifuging and then drying the compound sugar solution at 60°C to obtain the finished product of the compound sugar crystals of the xylose and the sucrose, wherein the xylose content is 2.68%.

4. The method of claim 1, comprising
operation 21, weighing 56g of the xylose and 168g of the sucrose, then adding 113.1g of the deionized water, stirring and dissolving at 75°C to obtain the mixed solution;
operation 22, introducing the mixed solution into the crystallization device, setting the stirring speed at 120rpm, the temperature at 80°C, and the vacuum pump pressure at 60mbar, turning on the vacuum evaporation device, evaporating the mixed solution until the refraction of the mixed solution reaches 80Brix, and stopping the vacuum evaporation;
operation 23, adjusting the temperature to 70°C, then adding the food-grade ethanol solution in the volume ratio of 2:1 dropwise at the rate of 1 drop/s, and adding 0.86g of the sucrose seed crystals with the particle diameter of 80 mesh, and continuing stirring for 1h;
operation 24, when the small seeds grow in the solution, dropping the temperature to 45°C at the rate of 10°C/h, and then stirring for 6h to obtain the compound sugar solution; and
operation 25, centrifuging and then drying the compound sugar solution at 50°C to obtain the finished product of the compound sugar crystals of the xylose and the sucrose, wherein the xylose content is 4.63%.

5. The method of claim 1, comprising:
operation 31, weighing 84g of the xylose and 168g of the sucrose, then adding 126g of the deionized water, stirring and dissolving at 80°C to obtain the mixed solution;
operation 32, introducing the mixed solution into the crystallization device, setting the stirring speed at 115rpm, the temperature at 78°C, and the vacuum pump pressure at 90mbar, turning on the vacuum evaporation device, evaporating the mixed solution until the refraction of the mixed solution reaches 78Brix, and stopping the vacuum evaporation;
operation 33, adjusting the temperature to 70°C, then adding the food-grade isopropanol solution in the volume ratio of 3:1 dropwise at the rate of 2 drops/s, and adding 0.86g of the sucrose seed crystals with the particle diameter of 80 mesh, and continuing stirring for 2h;
operation 34, when the small seeds grow in the solution, dropping the temperature to 50°C at the rate of 10°C/h, and then stirring for 6h to obtain the compound sugar solution; and
operation 35: centrifuging and then drying the compound sugar solution at 40°C to obtain the finished product of the compound sugar crystals of the xylose and the sucrose, wherein the xylose content is 1.15%.

6. The method of claim 1, comprising:
operation 41, weighing 28g of the xylose and 168g of the sucrose, then adding 88.2g of the deionized water, stirring and dissolving at 77°C to obtain the mixed solution;
operation 42, introducing the mixed solution into the crystallization device, setting the stirring speed at 60rpm, the temperature at 78°C, and the vacuum pump pressure at 200mbar, turning on the vacuum evaporation device, evaporating the mixed solution until the refraction of the mixed solution reaches 81Brix, and stopping the vacuum evaporation ends;
operation 43, adjusting the temperature to 75°C, then adding the food-grade isopropanol solution in the volume ratio of 3:1 dropwise at the rate of 2 drops/s, and adding 3.36g of the sucrose seed crystals with the particle diameter of 60 mesh, and continuing stirring for 2h;
operation 44, when the small seeds grow in the solution, dropping the temperature to 60°C at the rate of 10°C/h, and then stirring for 6h to obtain the compound sugar solution; and
operation 45, centrifuging and then drying the compound sugar solution at 40°C to obtain the finished product of the compound sugar crystals of the xylose and the sucrose, wherein the xylose content is 0.85%.
